Europäisches Patentamt

**European Patent Office**

Office européen des brevets

(19)

(11) Veröffentlichungsnummer : **0 188 472**
**B1**

(12)

# EUROPÄISCHE PATENTSCHRIFT

(45) Veröffentlichungstag der Patentschrift :
07.09.88

(51) Int. Cl.⁴ : **B 65 G 65/38**

(21) Anmeldenummer : 85903254.2

(22) Anmeldetag : 22.06.85

(86) Internationale Anmeldenummer :
**PCT/EP 85/00302**

(87) Internationale Veröffentlichungsnummer : 
**WO/8600872 (13.02.86 Gazette 86/04)**

(54) SILO MIT KREISRUNDEM GRUNDRISS FÜR SCHÜTTGÜTER UND EINEM AN EINER STÜTZSÄULE HEB-UND
SENKBAR ANGEORDNETEN QUERFÖRDERER.

(30) Priorität : 25.07.84 DE 3427410

(43) Veröffentlichungstag der Anmeldung :
30.07.86 Patentblatt 86/31

(45) Bekanntmachung des Hinweises auf die Patenterteilung : 07.09.88 Patentblatt 88/36

(84) Benannte Vertragsstaaten :
**AT BE CH FR GB IT LI LU NL SE**

(56) Entgegenhaltungen :
**WO-A-86 /008 71**
**DE-A- 1 914 600**
**DE-A- 1 933 337**

(73) Patentinhaber : **AJO STAHLBAU GMBH & Co. KG**
**D-5905 Freudenberg-Oberfischbach (DE)**

(72) Erfinder : **BUDDENBERG, Jörg, Wolfgang**
**Filderstrasse 141**
**D-4130 Moers 1 (DE)**

(74) Vertreter : **Ackmann, Günther, Dr.-Ing.**
**Claubergstrasse 24 Postfach 10 01 01**
**D-4100 Duisburg 1 (DE)**

Jouve, 18, rue St-Denis, 75001 Paris, France

EP 0 188 472 B1

## Beschreibung

Die Erfindung betrifft ein Silo mit kreisrundem Grundriß für Schüttgüter und einer zentrischen Stützsäule für eine von oben beschickbare und um die Mittelachse verdrehbare Füllvorrichtung und einen an der Stützsäule hebund senkbar sowie um die Stützsäule verdrehbar angeordneten Querförderer, der durch ein lotrecht teleskopartig verlängerbares Füllrohr mit der Füllvorrichtung verbunden ist, wobei die aus ringförmigen Scheibenelementen aufgebaute Stützsäule an ihrem Umfang mit Führungsschienen für ein den Querförderer tragendes Hub- und Drehgestell sowie einem zentrischen Entleerungsschacht versehen ist.

Bei einem bekannten Großsilo dieser Art (NL-Patentanmeldung 8103486) werden eine Füllvorrichtung und eine Kranbrücke mit dem Querförderer um die Mittelachse des Silos gedreht, wobei das Schüttgut durch das bis kurz über den Füllstand reichende Füllrohr nach unten fällt und von dem horizontal geführten Querförderer radial nach außen transportiert wird. Der Querförderer wird mit steigendem Füllstand angehoben, wobei er seine horizontale Lage beibehält. Zur Entleerung werden die beiden Schnecken des Querförderers gegenläufig derart angetrieben, daß sie das Schüttgut radial nach innen fördern, wo es über ringförmige Scheibenelemente der Stützsäule in einen Entleerungsschacht nach unten fällt und dort mittels eines Schneckenförderers abgezogen wird. Die Scheibenelemente sind mit Abstand säulenförmig angeordnet, und deren horizontale Ringfläche ist mindestens so breit, daß das Schüttgut entsprechend seinem Böschungswinkel darauf liegen bleibt und erst durch Einwirkung des radial nach innen transportierenden Querförderers in den Entleerungsschacht fällt. Zur Versteifung der ringförmigen Scheibenelemente ist deren Außenrand mit einem nach unten weisenden kragenförmigen Ansatz versehen, der jedoch in nachteiliger Weise leicht zu Verstopfungen des Schüttgutes führt, wenn dieses beim Entleeren vom Querförderer gegen den kragenförmigen Ansatz gepreßt wird. Wegen dieser Verstopfungsgefahr ist deshalb die Anwendung einer aus ringförmigen Scheibenelementen aufgebauten Stützsäule, die an sich gegenüber anderen Entleerungseinrichtungen große Vorteile bietet, bisher nur für Schüttgüter geeignet, für welche diese Schwierigkeit nicht besteht.

Weiterhin ist aus der DE-A1-1 933 337 eine Ausführung bekannt, bei der sich zwischen Zelle und Fallkanal übereinander angeordnete Öffnungen befinden, die durch Seitenwände und jalousieartige horizontale, schräge oder gewölbte Flächen gebildet werden. Die Flächenelemente besitzen jedoch an ihrem Außenrand keinen der Versteifung dienenden, nach unten weisenden kragenförmigen Ansatz. Daher werden die vom Querförderer und der Hub- und Dreheinrichtung verursachten Kräfte von einer oberen Kranbrücke aufgenommen. Die Flächenelemente können keine Stützsäulen für den Querförderer bilden. In der nach Art. 54 (3) EPÜ als Stand der Technik zu berücksichtigenden europäischen Patentanmeldung 85903253.4 (WO 86/00871) ist in der vertikalen Mittelachse des Silos eine torsionsfeste Stützsäule angeordnet, die aus einem wendelförmigen Band besteht. Aus der zugehörigen Zeichnung ergibt sich, daß das wendelförmige Band an seinem Außenrand spitzwinklig zuläuft, wobei die Winkelspitze etwa in halber Höhe des Bandes verläuft. Über den Aufbau des wendelförmigen Bandes sind in dieser älteren Anmeldung keine näheren Angaben zu finden.

Demgegenüber liegt der Erfindung die Aufgabe zugrunde, bei einem Silo mit einer aus ringförmigen Scheibenelementen aufgebauten Stützsäule den Aufbau der Stützsäule derart zu verbessern, daß auch leicht zu Verstopfungen neigende Schüttgüter ohne Verstopfungsgefahr gelagert werden können.

Diese Aufgabe wird durch die im Anspruch 1 angegebenen Merkmale gelöst.

Die zum Schüttgut weisende spitze Kante hat zunächst den Vorteil, daß das Schüttgut beim Entleeren in die zwischen den Scheibenelementen vorhandenen Zwischenräume gelenkt und ein zu Verstopfungen führender Stau vor den kragenförmigen Ansätzen vermieden wird, wobei eine günstige Ablenkung in den oberen und unteren Zwischenraum erzielt wird. Durch die winkelförmige Ausbildung des kragenförmigen Ansatzes wird die Steifigkeit der Stützsäule verbessert, so daß die beim Entleeren auftretenden Kräfte besser aufgenommen werden.

Zur Anpassung an die Schüttkegel kann die Ringfläche der Scheibenelemente konkav oder konvex ausgebildet sein. Bei einer konkaven Ausbildung wird der Böschungswinkel des Schüttgutes verringert, bei einer konvexen Ausbildung vergrößert. Weiterhin kann in die Stützsäule ein wendelförmiges Band eingebaut sein, so daß die Anordnung vieler ringförmiger Scheibenelemente entfällt ; bei Einbau eines wendelförmigen Bandes ist die Stützsäule torsionssteifer und fester gegen Knickbeanspruchungen.

Um bei Schüttgut, das sich leicht festsetzt, wie z. B. Aschen, eine Lockerung im Bereich der ringförmigen Scheibenelemente bzw. des wendelförmigen Bandes zu erzielen, ist zweckmäßig unter der Ringfläche der Scheibenelemente bzw. des wendelförmigen Bandes ein ring- bzw. wendelförmiges Belüftungsrohr angeordnet, dessen Belüftungsöffnungen auf die darunter befindliche Lagerfläche für das Schüttgut gerichtet sind.

Die ringförmigen Scheibenelemente bzw. das wendelförmige Band lassen sich dadurch in einfacher Weise versteifen, daß innerhalb der Scheibenelemente bzw. des wendelförmigen Bandes radial liegende, lotrechte Versteifungswände angeordnet sind. Diese können auch an einem zentrischen Rohr befestigt sein, welches sich bedarfsweise als Begehungsschacht einrichten läßt. Die Führungsschienen für das Hub- und Drehgestell sind für eine günstige Kraftübertragung vorzugsweise in einer radialen Flucht zu den Versteifungswänden am Außenumfang der Scheibenelemente bzw. des wendelförmigen Bandes befestigt.

Die Erfindung ist in der Zeichnung anhand mehrerer Ausführungsbeispiele näher erläutert ; es zeigt :

Fig. 1 ein Silo in einem vertikalen Schnitt,

Fig. 2 den Gegenstand der Fig. 1 in einem Querschnitt nach Linie I-I,

Fig. 3 eine zentrische Stützsäule mit ringförmigen Scheibenelementen,

Fig. 4 den Gegenstand der Fig. 3 in einem horizontalen Querschnitt,

Fig. 5 eine zentrische Stützsäule mit einem wendelförmigen Band,

Fig. 6 den Gegenstand der Fig. 5 in einem horizontalen Schnitt,

Fig. 7 einen Abschnitt der in Fig. 3 dargestellten Stützsäule in einer schematischen Darstellung und in einem großen Maßstab,

Fig. 8 einen Abschnitt der in Fig. 5 dargestellten Stützsäule in einer schematisierten Darstellung und in einem größeren Maßstab und

Fig. 9 und 10 zwei abgewandelte Ausführungen der ringförmigen Scheibenelemente.

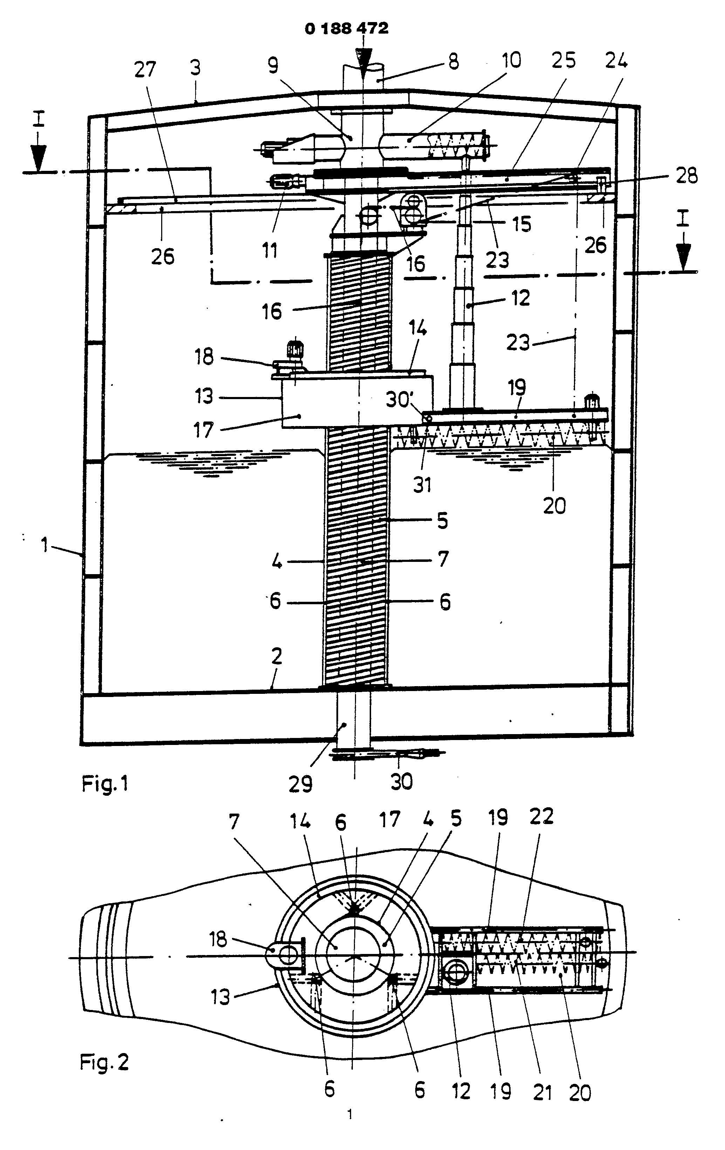

Das in den Fig. 1 und 2 dargestellte Ausführungsbeispiel zeigt ein Großsilo, dessen Durchmesser in der Regel zwischen 8 bis 16 m und darüber liegen und dessen Höhe bis zu 20 m und mehr betragen kann. Das Silo 1 hat einen kreisförmigen Grundriß durch eine zylinderförmige Wandung. Zugeordnet ist ein Boden 2 und ein Dach 3. Großsilos dieser Art werden in zunehmendem Maße dort verwendet, wo einerseits zum Zwecke des Umweltschutzes ein Versatz durch Windeinwirkung verhindert werden soll und anderseits ein Schutz des Behälterinhaltes gefordert, oder eine Zwischenlagerung von schwerfließbaren Schüttgütern verlangt wird.

In der vertikalen Mittelachse ist eine Stützsäule 4 angeordnet, die aus ringförmigen Scheibenelementen 5 besteht. Am Umfang der Stützsäule 4 sind Führungsschienen 6 für ein Hub- und Drehgestell 13 befestigt und im Inneren bilden die ringförmigen Scheibenelemente 5 einen Entleerungsschacht 7.

Zentrisch über der Stützsäule 4 befindet sich ein Einlaufrohr 8 und eine Füllvorrichtung 9, die mit einer frei auskragenden Förderschnecke 10 ausgerüstet und mittels eines Drehwerks 11 um die Mittelachse verdrehbar ist. Am äußeren Ende der Förderschnecke 10 ist ein lotrecht nach unten teleskopartig verlängerbares Füllrohr 12 angebracht.

An den Führungsschienen 6 der Stützsäule 4 wird ein Hub- und Drehgestell 13 geführt, das aus einem Hubteil 14 und einem Drehteil 17 besteht. Das Hubteil 14 ist an Hubseilen 16 aufgehängt, die von Hubwerken 15 angetrieben werden. Das Drehteil 17 ist mittels eines Drehwerkes 18 um das heb- und senkbare Hubteil 14 herum verdrehbar. Am Drehwerk 18 ist ein aus zwei parallelen Teilen bestehender Kragarm 19 befestigt, an dem der Querförderer 20 angebracht ist. Der Querförderer 20 besitzt zwei Schnecken 21,22, die auf der Oberfläche des eingelagerten Schüttgutes horizontal aufliegen und je nach der Drehrichtung das Schüttgut radial nach außen oder nach innen fördern. Zur Aufnahme der auskragenden Last des Kragarmes 19 und des Querförderers 20 ist dieses Bauteil mittels eines Hubseils 23 und über eine Rolle 24 mit dem Hubwerk 15 an einem Brückenträger 25 angehängt, dessen äußeres Ende mit einer Laufrolle 28 auf einer ringförmigen Kranbahn 27 läuft, die auf einer an der Silowandung angeordneten Konsole 26 befestigt ist. Zum Kräfteausgleich ist der Kragarm 19 am Drehteil 17 im Lager 30' gelenkig gelagert. Unter der Stützsäule 4 befindet sich im Boden 2 eine Entleerungsöffnung 29 und eine Entleerungsvorrichtung 30.

Zum Füllen des Silos 1 wird das Schüttgut von oben durch das Einlaufrohr 8 der Füllvorrichtung 9 aufgegeben, deren Förderschnecke 10 das Schüttgut in das lotrechte Füllrohr 12 transportiert, in dem es nach unten in den Querförderer 20 fällt. Der Querförderer 20 schiebt das Schüttgut radial nach außen und verteilt es somit bei seiner Verdrehung um die Mittelachse des Silos 1 auf den Siloquerschnitt. Die Füllvorrichtung 9, der Brückenträger 25 und das Drehteil 17 des Hub- und Drehgestells 13 werden synchron in gleicher Richtung gedreht, so daß sich der Querförderer 20 immer lotrecht unter der Förderschnecke 10 befindet. Nach jeder Umdrehung wird das Hub- und Drehgestell 13 um eine Füllschicht angehoben. Das im Bereich der Stützsäule 4 anstehende Schüttgut rutscht entsprechend seinem Schüttkegel auf das ringförmige Scheibenelement 5, jedoch nicht in den Entleerungsschacht 7.

Zum Entleeren werden die Schnecken 21,22 des Querförderers 20 in umgekehrter Richtung angetrieben, so daß das Material radial nach innen transportiert, zwischen den ringförmigen Scheibenelementen 5 hindurchgedrückt wird und in den Entleerungsschacht 7 fällt. Auch beim Entleerungsvorgang laufen die Füllvorrichtung 9 und das Drehteil 17 des Hub- und Drehgestells 13 sychron. Das Hubteil 14 wird entsprechend dem Schüttgutaustrag Schicht um Schicht abgesenkt.

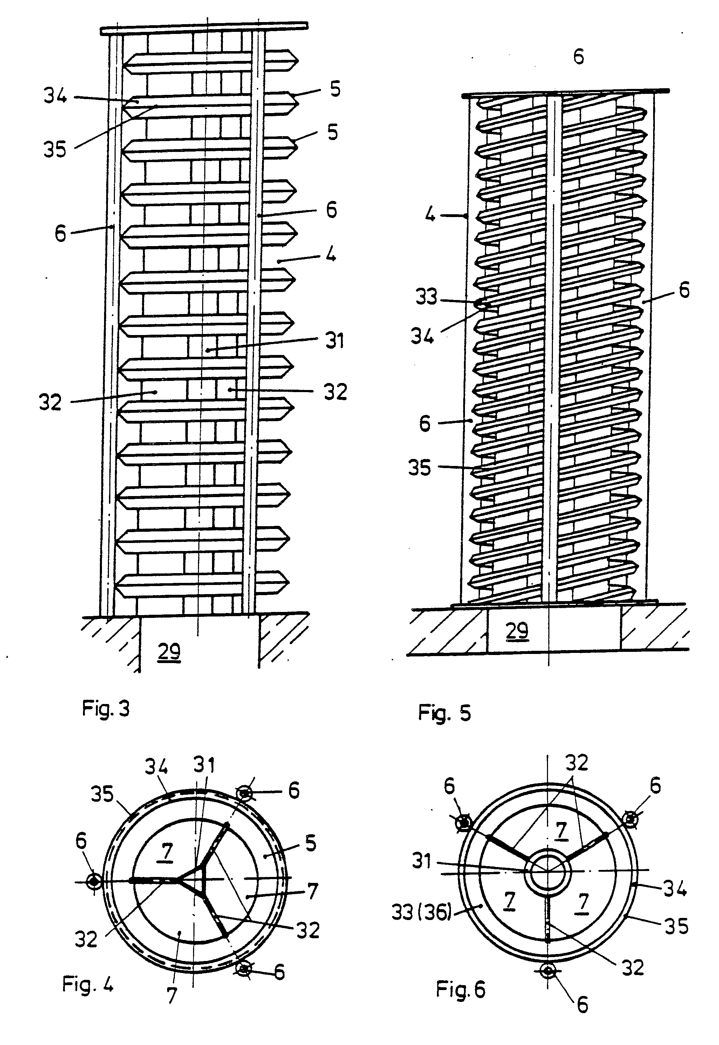

Die Fig. 3 und 4 zeigen den Aufbau einer Stützsäule 4 mit ringförmigen Scheibenelementen 5. Die einzelnen Scheibenelemente 5 werden an lotrechten Versteifungswänden 32, die im Inneren angeordnet sind und an den am Außenumfang angeordneten rohrförmigen Führungsschienen 6 befestigt. Im Inneren sind die radial liegenden Versteifungswände 32 an einem zentrischen Rohr 31 befestigt. Wie Fig. 4 zeigt, sind die Führungsschienen 6 in einer radialen Flucht zu den lotrechten Versteifungswänden 32 am Außenumfang der ringförmigen Scheibenelemente 5 befestigt.

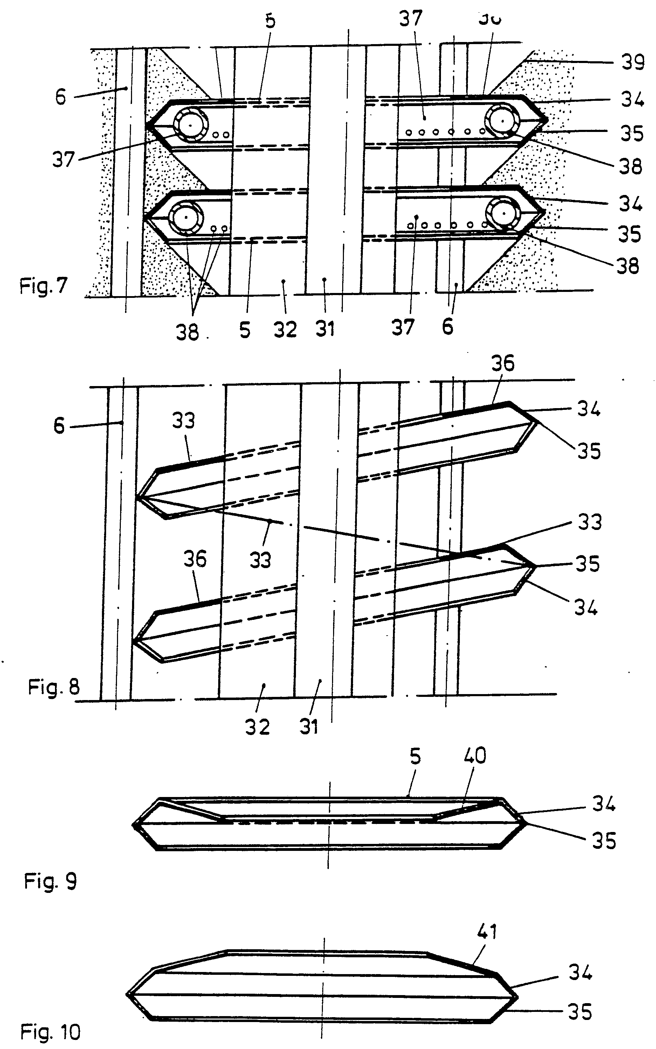

Die in den Fig. 3 und 4 gezeigten, horizontal angeordneten ringförmigen Scheibenelemente 5 haben an ihrem Außenrand einen nach unten weisenden kragenförmigen Ansatz 34, der einen winkelförmigen Querschnitt besitzt, wobei die Winkelspitze 35 nach außen gerichtet ist. Der winkelförmige Ansatz 34 erstreckt sich mithin über den ganzen Umfang der Scheibenelemente 5. Wie in Fig. 7 angedeutet ist, fällt bzw. rutscht das eingelagerte Schüttgut entsprechend seinem Böschungswinkel auf die Ringfläche 36 und bleibt wegen der Breite der Ringfläche 36 dort liegen, ohne in den Entleerungsschacht 7 zu rutschen. Der Abstand der Scheibenelemente 5 und die Breite der Ringfläche 36 ist entsprechend bemessen. Die Böschung 39 ist in Fig. 7 beispielweise mit einem Winkel von 45° eingetragen. Beim Entleeren wird nun das Schüttgut vom Querförderer 20 radial nach innen geschoben und dabei von dem winkelförmigen Ansatz 34 in den Zwischenraum zwischen den Scheibenelementen 5 gelenkt. Durch die winkelförmige Ausgestaltung des Außenrandes der Scheibenelemente 5 entstehen keine Druckzonen, die zu Verstopfungen führen könnten. Für eine günstige Ablenkung kann die Winkelspitze 35 etwa in halber Höhe des Ansatzes 34 angeordnet sein.

Um zusammmengebackenes bzw. festgesetztes Schüttgut im Bereich der Scheibenelemente 5 zu lockern, können bedarfsweise, wie Fig. 7 zeigt, unter der Ringfläche 36 der Scheibenelemente 5 ringförmige Belüftungsrohre 37 angeordnet sein, deren Belüftungsöffnungen 38 auf die darunter befindliche Lagerfläche für das Schüttgut gerichtet sind.

Die Vorteile des winkelförmig ausgebildeten Ansatzes 34 lassen sich auch bei einer Stützsäule 4 erreichen, die anstelle vieler ringförmiger Scheibenelemente 5 ein wendelförmiges Band 33 aufweist, wie es in den Fig. 5, 6 und 8 dargestellt ist. Bei dieser Ausführung liegt die wendelförmige Ringfläche 36 schräg zur Mittelachse. Ein eventuell vorgesehenes Belüftungsrohr (nicht dargestellt) hat einen entsprechenden wendelförmigen Verlauf.

Weitere Abwandlungen ringförmiger Scheibenelemente 5 zeigen die Fig. 9 und 10. Bei der Ausführung nach Fig. 9 ist eine konkave Ringfläche 40 und bei der Ausführung nach Fig. 10 eine konvexe Ringfläche 41 vorgesehen. Eine solche Ausgestaltung ist auch bei einem wendelförmigen Band 33 möglich. Ebenso können bei solchen Abwandlungen Belüftungsrohre 37 vorgesehen sein.

**Patentansprüche**

1. Silo (1) mit kreisrundem Grundriß für Schüttgüter, gekennzeichnet durch folgende Merkmale :

(a) im Silo ist eine zentrische Stützsäule (4) vorgesehen,

(b) am oberen Ende der Stützsäule (4) befindet sich eine von oben beschickbare und um die Mittelachse verdrehbare Füllvorrichtung (9),

(c) die Stützsäule (4) besteht aus ringförmigen Scheibenelementen (5), die einen zentrischen Entleerungsschacht (7) bilden,

(d) am Umfang der Stützsäule (4) sind Führungsschienen (6) für ein einen Querförderer (20) tragendes Hub und Drehgestell (13) angebracht,

(e) der Querförderer (20) ist durch ein lotrecht teleskopartig verlängerbares Füllrohr (12) mit der Füllvorrichtung (9) verbunden,

(f) die Scheibenelemente (5) haben an ihrem Außenrand einen nach unten weisenden, kragenförmigen Ansatz (34)

(g) der Ansatz (34) hat einen winkelförmigen Querschnitt, wobei die Winkelspitze (35) nach außen gerichtet ist und etwa in halber Höhe des Ansatzes (34) liegt.

2. Silo für Schüttgüter nach Anspruch 1, dadurch gekennzeichnet, daß die Ringfläche (36) der Scheibenelemente (5) konkav oder konvex ausgebildet ist.

3. Silo für Schüttgüter nach Anspruch 1 oder 2, dadurch gekennzeichnet, daß die Scheibenelemente (5) aus einem wendelförmigen Band (33) bestehen.

4. Silo für Schüttgüter nach einem der Ansprüche 1 bis 4, dadurch gekennzeichnet, daß unter der Ringfläche (36) der Scheibenelemente (5) bzw. des wendelförmigen Bandes (33) ein ring- bzw. wendelförmiges Belüftungsrohr (37) angeordnet ist; dessen Belüftungsöffnungen (38) auf die darunter befindliche Lagerfläche für das Schüttgut gerichtet sind.

5. Silo für Schüttgüter nach einem der Ansprüche 1 bis 5, dadurch gekennzeichnet, daß innerhalb der scheibenelemente (5) bzw. des wendelförmigen Bandes (33) radial liegende, lotrechte Versteifungswände (32) angeordnet sind.

6. Silo für Schüttgüter nach Anspruch 6, dadurch gekennzeichnet, daß die Versteifungswände (32) an einem zentrischen Rohr (31) befestigt sind.

7. Silo für Schüttgüter nach Anspruch 6 oder 7, dadurch gekennzeichnet, daß die Führungsschienen (6) in einer radialen Flucht zu den Versteifungswänden (32) am Außenumfang der Scheibenelemente (5) bzw. des wendelförmigen Bandes (33) befestigt sind.

**Claims**

1. A silo (1) having a circular ground plan for bulk materials, characterised by the following features ;

(a) A central support column (4) is provided in the silo ;

(b) A filling device (9) loadable from ebove and rotatable around the central axis is disposed at the top end of the support column (4) ;

(c) The support column (4) comprises annular disc elements (5) forming a central emptying shaft (7) ;

(d) Guide bars (6) for a lifting and rotating frame (13) bearing a cross-conveyor (20) are disposed at the periphery of the support column (4) ;

(e) The cross-conveyor (20) is connected to the filling device (9) by a filling tube (12) which can be telescopically extended vertically ;

(f) The disc elements (5) have a downwardly extending collar-shaped projection (34) at their outer edge, and

(g) The projection (34) has an angular cross-section, the tip (35) of the angle being directed outwards and being substentially helf way up the projection (34).

2. A silo for bulk materials according to claim 1, characterised in that the annular surface (36) of the disc elements (5) is made concave or convex.

3. A silo for bulk materials according to claim 1 or 2, characterised in that the disc elements (5) comprise a helical strip (33).

4. A silo for bulk materials according to any of claims 1 to 4, characterised in that an annular or helical vent pipe (37) is disposed under the annular surface (36) of the disc elements (5) or of the helical strip (33) and has vent openings (38) directed towards the bulk material on the bearing surface underneath.

5. A silo for bulk materials according to any of claims 1 to 5, characterised in that radial vertical stiffening walls (32) are disposed inside the disc elements (5) or the helical strip (33)

6. A silo for bulk materials according to claim 6, characterised in that the stiffening walls (32) are secured to a central tube (31)

7. A silo for bulk materials according to claim 6 or 7, characterised in that the guide rails (6) are secured to the outer periphery of the disc elements (5) or helical strip (33) in radial alignment with the stiffening walls (32).

## Revendications

1. Silo (1) à matières en vrac, de contour circulaire en projection horizontale, remarquable par les caractéristiques suivantes :

(a) une colonne centrale de support (4) est prévue dans le silo,

(b) à l'extrémité supérieure de la colonne de support (4) se trouve un dispositif de remplissage (9) pouvant être alimenté par le haut et pouvant tourner autour de l'axe central,

(c) la colonne de support (4) est constituée d'éléments annulaires en forme de disque (5), qui forment un puits central de vidage (7),

(d) sur le pourtour de la colonne de support (4) sont montés des rails de guidage (6) d'un châssis rotatif de levage (13) portant un convoyeur transversal (20),

(e) le convoyeur transversal (20) est relié au dispositif de remplissage (9) par un tube vertical de remplissage (12) télescopique,

(f) les éléments en forme de disque (5) ont sur leur bord extérieur un rebord en forme de collet (34), qui est tourné vers le bas,

(g) le rebord (34) a une section transversale formant un angle dont le sommet (35) pointe vers l'extérieur et qui est à peu près à mi-hauteur du rebord (34).

2. Silo à matières en vrac suivant la revendication 1, caractérisé en ce que la surface annulaire (36) des éléments en forme de disque (5) est concave ou convexe.

3. Silo à matières en vrac suivant la revendication 1 ou 2, caractérisé en ce que les éléments en forme de disque (5) sont constitués d'une bande hélicoïdale (33).

4. Silo à matières en vrac suivant l'une des revendications 1 à 4, caractérisé en ce qu'en-dessous de la surface annulaire (36) des éléments en forme de disque (5), ou de la bande hélicoïdale (33), est monté un tube d'aération (37) annulaire ou hélicoïdal, dont les orifices d'aération (38) sont dirigés sur la surface sous-jacente de stockage du produit en vrac.

5. Silo à matières en vrac suivant l'une des revendications 1 à 5, caractérisé en ce que, dans les éléments en forme de disque (5) ou la bande hélicoïdale (33), sont montées des parois verticales de renforcement (32) disposées radialement.

6. Silo à matières en vrac suivant la revendication 6, caractérisé en ce que les parois de renforcement (32) sont fixées à un tube central (31).

7. Silo à matières en vrac suivant la revendication 6 ou 7, caractérisé en ce que les rails de guidage (6) sont fixés en alignement radial avec les parois de renforcement (32), sur le pourtour extérieur des éléments en forme de disque (5) ou de la bande (33) hélicoïdale.

Fig.1

Fig.2

Fig. 3

Fig. 5

Fig. 4

Fig. 6

2

Fig. 7

Fig. 8

Fig. 9

Fig. 10